# FASCICULE DE BREVET EUROPEEN

(11) **EP 1 306 591 B1**
(45) Date de publication et mention de la délivrance du brevet: **28.09.2005**
(21) Numéro de dépôt: 02292636.4
(22) Date de dépôt: 24.10.2002
(51) Int. Cl.: F16J 15/34, F01D 5/08

(54) **Joint d'étanchéité à deux lèvres concentriques**
Dichtungsanordnung mit zwei konzentrischen Lippen
Sealing system having two concentrically arranged lips

(30) Priorité: 25.10.2001 FR 0113781
(43) Date de publication de la demande: 02.05.2003
(73) Titulaire: SNECMA, 75015 Paris (FR)
(72) Inventeur: Plona, Daniel Georges, 77870 Vulaines sur Seine (FR)

(56) Documents cités:
- FR-A- 2 785 355
- US-A- 2 598 176
- US-A- 3 383 033
- US-A1- 2001 006 278

## Description

Le sujet de cette invention est un joint d'étanchéité disposé entre deux pièces mutuellement tournantes, et plus précisément du genre coulissant sur une des pièces dans l'axe de rotation et comportant deux lèvres concentriques dirigées vers une face plane de l'autre des pièces.

Un tel joint établit une étanchéité variable entre deux enceintes délimitées par les deux pièces d'après le jeu entre les lèvres et la face plane, et prend des états d'équilibre déterminés par les forces des différentes pressions auxquelles sa surface est soumise. Les lèvres ont le rôle important de délimiter une cavité où une pression intermédiaire à celles des deux enceintes que le joint sépare s'instaure, comme il est présenté dans le brevet US 2001/0006272. Cette pression intermédiaire dépend du jeu entre les lèvres et la face plane de la pièce en regard : si par exemple ce jeu s'accroît, les fuites à travers le joint deviennent plus importantes et la pression dans la cavité tend à s'approcher de la pression la plus basse. L'équilibre des pressions est rompu car les forces de pression agissant dans la cavité et repoussant le joint de la face plane sont amoindries, alors que les autres forces de pression restent les mêmes. Le joint est donc repoussé vers la face plane jusqu'à ce que le jeu reprenne sa valeur d'équilibre. Un joint bien conçu de ce genre ne frotte donc pas contre la face plane, mais ne laisse fuir que de faibles débits de gaz à travers lui.

La stabilité de l'équilibre peut pourtant devenir un inconvénient dans certaines circonstances, notamment quand le gaz de l'enceinte à haute pression est un gaz de ventilation dont on voudrait accroître le débit de fuite vers l'autre enceinte à l'occasion pour la réfrigérer plus.

Le but de cette invention est en conséquence le perfectionnement du joint d'étanchéité décrit ci-dessus de manière à pouvoir faire varier son jeu et son débit de fuite et ce de façon volontaire et commandée. Le moyen retenu consiste à permettre la déformation d'une des portions du joint, porteuse d'une des lèvres, pour l'éloigner ou l'approcher de la pièce plane et favoriser ou contrarier la communication de la cavité vers l'enceinte située derrière cette lèvre mobile. La pression dans la cavité est modifiée en conséquence, ainsi que l'équilibre des pressions, qui est retrouvé pour une autre position du joint impliquant un jeu et un débit de fuite différents.

Il existe des joints déformables sous la pression du gaz environnant, mais ils sont employés dans des situations différentes et n'enseignent notamment pas comment modifier la pression dans une cavité intermédiaire aux enceintes. On citera le brevet européen 0 629 798 et le brevet français 2 765 653 pour des exemples.

Les forces responsables de la déformation de la couronne, peuvent être de natures variées comme on le verra plus loin.

Ainsi, l'invention est relative à un joint d'étanchéité selon la revendication 1.

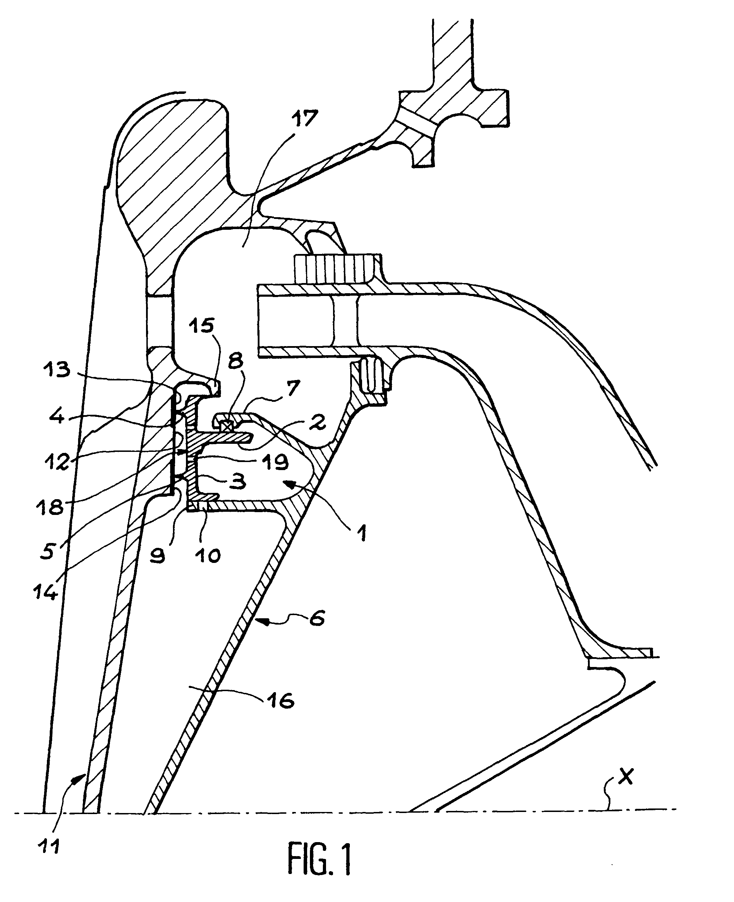

L'invention sera maintenant décrite en liaison aux figures. La figure 1 représente une vue générale du joint conforme à l'invention, et les figures 2 et 3 deux variantes de réalisation.

Le joint porte la référence générale 1 et se compose d'un manchon 2 cylindrique, d'une couronne circulaire 3 attenante au manchon 2, et de deux lèvres 4 et 5 d'étanchéité saillant de la couronne 3 sur sa face opposée au manchon 2 ; il est lié en rotation à une pièce 6 comprenant, entre autres, un manchon 7 dans lequel celui du joint 1 peut coulisser par l'intermédiaire d'une garniture 8 qui établit une étanchéité secondaire. Le joint 1 comprend encore un pion d'arrêt en rotation 9 qui est retenu dans une rainure 10 de la pièce 6 afin de les maintenir ensemble contre les mouvements de rotation, et il peut être continu ou composé de secteurs d'arc aboutés, ainsi qu'il est connu dans l'art.

Une deuxième pièce 11 porte une face plane 12 comprenant une paire de facettes, polies en glaces, 13 et 14 respectivement devant les lèvres 4 et 5 ; on peut aussi mentionner un crochet 15 s'étendant par delà la couronne 3 et venant coiffer son pourtour extérieur, afin de se prémunir contre des mouvements de recul excessifs du joint 1, toujours possibles dans des phases transitoires de fonctionnement de la machine dont il fait partie. Les pièces 6 et 11 tournent l'une par rapport à l'autre autour d'un axe X.

Une enceinte à haute pression 16 est comprise entre les pièces 6 et 11 et la lèvre 5, et une enceinte à basse pression 17 entre les mêmes pièces 6 et 11 et l'autre lèvre 4 ; enfin, une cavité 18 est délimitée par la couronne 3, les lèvres 4 et 5 et la face plane 12 de la pièce 11.

Un courant de fuite est entretenu de l'enceinte 16 à l'enceinte 17 par le jeu entre les lèvres 4 et 5 et les glaces 13 et 14 ; une pression intermédiaire apparaît dans la cavité 18, et sa valeur peut être modifiée par des perçages 19 à travers la couronne 3 pour établir une liaison supplémentaire avec l'une ou l'autre des enceintes, ici l'enceinte à haute pression 16.

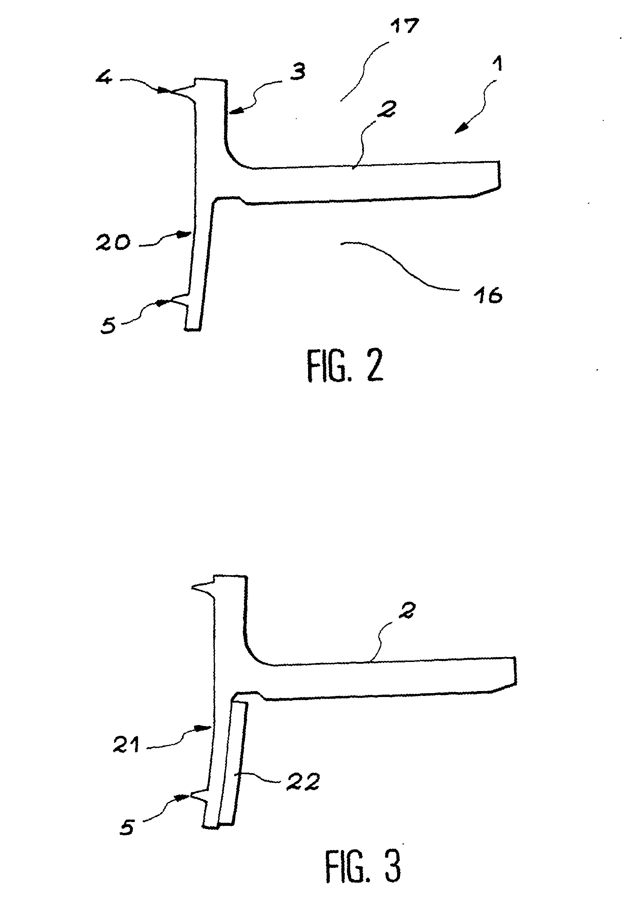

Comme le montre la figure 2, la couronne 3 est amincie du côté de l'enceinte à haute pression 16 et de la lèvre 5, de manière à y créer une portion flexible 20. En réglant la pression haute dans l'enceinte 16 de manière à l'accroître, la partie 20 fléchit vers la face plane 12 et diminue la communication avec l'enceinte à haute pression 16, et donc le débit de fuite. Réciproquement, une diminution de la pression haute dans l'enceinte 16 augmente ce débit.

La figure 3 montre une conception équivalente, où ce n'est cependant pas un réglage de pression qui commande la déformation le débit de fuite, mais une modification de la température : la partie flexible, portant ici la référence 21, de la couronne 3 (située comme précédemment entre le manchon 2 et la lèvre 5), est complétée par une couche 22 de matière hétérogène qui lui confère une structure bimétallique, dont la propriété est donc de fléchir grâce aux différences des coefficients de dilatation. Un même effet pourrait être obtenu avec une matière à mémoire de forme travaillée de façon à présenter deux états de flexion différents ; cette matière pourra être rapportée à la surface du joint 1, comme la couche 22, en adhérant au joint 1 ; ou le joint 1 lui-même pourra être construit en cette matière.

Le manchon 2 se raccorde à la couronne 3 hors de son rayon moyen et en la divisant en deux portions de largeurs inégales, et la porton flexible correspond à la partie la plus large mesurée à partir du manchon 2.

## Revendications

1. Joint d'étanchéité (1) destiné à être disposé entre une première pièce (11) munie d'une paire de facettes circulaires et planes (13, 14) et une seconde pièce (6) pouvant tourner par rapport à la première pièce et devant les facettes autour d'un axe (X), le joint (1) comprenant un manchon cylindrique (2), une couronne (3) fixée au manchon, et deux lèvres circulaires (4,5) saillant de la couronne vers les facettes lorsque le joint est monté, la couronne (3) comprenant, entre le manchon et une des lèvres, une portion (20,21), flexible sous l'effet de forces environnantes, **caractérisé en ce que** le manchon est destiné à glisser sur la seconde pièce dans l'axe et le manchon se rattache à la couronne hors d'un rayon moyen de celle-ci, en la divisant en deux portions de largueur inégales, et **en ce que** la portion flexible correspond à une portion de plus grande largeur de la couronne, mesurée à partir du manchon.

2. Joint d'étanchéité selon la revendication 1, **caractérisé en ce que** des perçages (19) traversent la couronne (3).

3. Joint d'étanchéité selon l'une quelconque des revendications 1 ou 2, **caractérisé en ce que** la portion flexible correspond à un amincissement de la couronne.

4. Joint d'étanchéité selon l'une quelconque des revendications 1 ou 2, **caractérisé en ce que** la portion flexible comprend une partie hétérogène à une portion complémentaire de la couronne.

5. Joint d'étanchéité selon la revendication 4, **caractérisé en ce que** la partie hétérogène est en alliage à mémoire de forme.

6. Joint d'étanchéité selon la revendication 4, **caractérisé en ce que** la portion flexible est bimétallique.

7. Joint d'étanchéité selon la revendication 1, **caractérisé en ce que** le joint est en alliage à mémoire de forme.

## Patentansprüche

1. Dichtungsanordnung (1), die dazu bestimmt ist, zwischen einem ersten Teil (11), das mit einem Paar kreisförmiger und ebener Facetten (13, 14) versehen ist, und einem zweiten Teil (6), das sich gegenüber dem ersten Teil vor den Facetten um eine Achse (X) drehen kann, angeordnet zu werden, wobei die Dichtungsanordnung (1) eine zylinderförmige Muffe (2), einem an der Muffe angebrachten Kranz (3) und zwei kreisförmige Dichtungslippen (4, 5), die bei eingebauter Dichtungsanordnung von dem Kranz zu den Facetten hin hervorstehen, aufweist, wobei der Kranz (3) zwischen der Muffe und einer der Lippe einen Abschnitt (20, 21) aufweist, der unter Einwirkung von umgebenden Kräften bewegbar ist
**dadurch gekennzeichnet,**
**dass** die Muffe dazu bestimmt ist, auf dem zweiten Teil entlang der Achse zu gleiten, und die Muffe sich an den Kranz außerhalb von dessen durchschnittlichen Radius anschließt, wobei sie ihn in zwei Abschnitte mit ungleichen Breiten unterteilt, und dass der bewegliche Abschnitt dem breiteren Teil, von der Muffe aus gemessen, entspricht.

2. Dichtungsanordnung nach Anspruch 1,
**dadurch gekennzeichnet,**
**dass** Bohrungen (19) durch den Kranz (3) hindurch verlaufen.

3. Dichtungsanordnung nach einem der Ansprüche 1 oder 2,
**dadurch gekennzeichnet,**
**dass** der bewegliche Abschnitt einer Verschlankung des Kranzes entspricht.

4. Dichtungsanordnung nach einem der Ansprüche 1 oder 2,
**dadurch gekennzeichnet,**
**dass** der bewegliche Abschnitt einen Teil aufweist, der heterogen mit einem ergänzenden Abschnitt des Kranzes ist.

5. Dichtungsanordnung nach Anspruch 4,
**dadurch gekennzeichnet,**
**dass** der heterogene Teil aus einer Legierung mit Formgedächtnis besteht.

6. Dichtungsanordnung nach Anspruch 4,
**dadurch gekennzeichnet,**
**dass** der bewegliche Abschnitt bimetallisch ist.

7. Dichtungsanordnung nach Anspruch 1,
**dadurch gekennzeichnet,**
**dass** die Dichtung aus einer Legierung mit Formgedächtnis besteht.

## Claims

1. Seal (1) intended to be arranged between a first component (11) equipped with a pair of circular planar facets (13, 14) and a second component (6) able to rotate with respect to the first component and past the facets about an axis (X), the seal (1) comprising a cylindrical sleeve (2), an annulus (3) fixed to the sleeve, and two circular lips (4, 5) projecting from the annulus towards the facets when the seal is fitted, the annulus (3) comprising, between the sleeve and one of the lips, a flexible portion (20, 21) able to flex under the effect of surrounding forces, **characterized in that** the sleeve is intended to slide over the second component along the axis and the sleeve is attached to the annulus away from a mean radius thereof, dividing it into two portions of unequal width, and **in that** the flexible portion corresponds to a portion of greater width of the annulus, measured from the sleeve.

2. Seal according to Claim 1, **characterized in that** drillings (19) pass through the annulus (3).

3. Seal according to either one of Claims 1 and 2, **characterized in that** the flexible portion corresponds to a thinning of the annulus.

4. Seal according to either one of Claims 1 and 2, **characterized in that** the flexible portion comprises a part heterogeneous with a complementary portion of the annulus.

5. Seal according to Claim 4, **characterized in that** the heterogeneous part is made of shape-memory alloy.

6. Seal according to Claim 4, **characterized in that** the flexible portion is bimetallic.

7. Seal according to Claim 1, **characterized in that** the seal is made of shape-memory alloy.
